Europäisches Patentamt

European Patent Office

Office européen des brevets

(11) Publication number: **0 060 143**
**B1**

# EUROPEAN PATENT SPECIFICATION

(45) Date of publication of patent specification: **05.06.85**

(21) Application number: **82301215.8**

(22) Date of filing: **10.03.82**

(51) Int. Cl.⁴: **H 02 K 29/12,** H 02 P 6/02,
H 02 P 1/16

(54) Electrical motor.

(30) Priority: **10.03.81 GB 8107562**

(43) Date of publication of application:
**15.09.82 Bulletin 82/37**

(45) Publication of the grant of the patent:
**05.06.85 Bulletin 85/23**

(84) Designated Contracting States:
**DE FR GB**

(56) References cited:
**DE-A-1 613 286**
**DE-A-1 763 295**
**US-A-3 377 535**

(73) Proprietor: **FORD MOTOR COMPANY LIMITED**
**Eagle Way**
**Brentwood Essex CM13 3BW (GB)**
㊿ **GB**

(73) Proprietor: **FORD-WERKE**
**AKTIENGESELLSCHAFT**
**Ottoplatz 2 Postfach 21 03 69**
**D-5000 Köln 21 (DE)**
㊿ **DE**

(73) Proprietor: **FORD FRANCE SOCIETE ANONYME**
**344 Avenue Napoléon Bonaparte B.P. 307**
**F-92506 Rueil Malmaison Cedex (FR)**
㊿ **FR**

(72) Inventor: **Collen, John William**
**4 Linda Gardens**
**Billericay Essex (GB)**

(74) Representative: **Drakeford, Robert William et al**
**Ford Motor Company Limited 15/448, Research**
**& Engineering Centre Laindon**
**Basildon Essex SS15 6EE (GB)**

# Description

This invention relates to electrical motors.

Conventional direct-current motors include a rotor, carrying a plurality of magnetic poles, and a stator, carrying at least two main windings which, when activated interact with the magnetic field produced by the magnetic poles to drive the rotor relative to the stator. Switching means in the form of a commutator and brushes is required to change the state of activation of the main windings in accordance with the rotational position of the rotor so that the rotor continues to rotate in one direction.

It has previously been proposed to replace the conventional commutator and brushes with electronic switching means such as a Hall generator (see, for example, GB—A—1,269,434). This avoids the manufacturing problems associated with commutators and brushes. However, Hall generators are relatively expensive.

US—A—3,377,535 discloses a brushless direct-current motor in which the rotor is also provided with search windings, each of which is associated with a respective one of the main windings. The current induced therein by their interaction with the magnetic field produced by the magnetic poles is used to control switches which activate the main windings in sequence in accordance with the rotational position of the rotor. However, such motors suffer from the disadvantage that rotation is equally likely to start in one direction as the other. This can be a disadvantage where the motor is used to operate, for example, a fan.

According to the present invention there is provided an electrical motor comprising a rotor carrying a plurality of permanent magnetic poles, a stator carrying at least two main windings which, when activated, interact with the magnetic fields generated by the said poles to drive the rotor relative to the stator, search windings on the stator each associated with a respective one of the main windings and arranged to interact with the magnetic field generated by the said poles and switches for each main winding operable by the search winding associated therewith to activate the main windings in sequence in accordance with the rotation of the rotor, characterised in that the switches activate the main windings for different relative durations during each of their respective operating cycles.

Since the main windings are energised for different periods, the rotational force produced by the main windings is different. It is therefore possible, by matching the energisation periods of the main windings to the inertia of the rotor, to ensure that the rotor always commences rotation in the same direction.

The switches preferably comprise switch circuits incorporating transistors. For example, each switch may comprise a power transistor for conducting current through the main winding, and a drive transistor for controlling the conductive state of the transistor.

The differences in activation of the main windings is conveniently achieved by connecting the search windings into a switch circuit having a different time constant.

To assist in a rapid start up of the motor each switch is preferably operable in response to current induced in the search winding by the main winding. Additionally, the main windings preferably occupy unequal parts of the circumferential length of the stator.

A preferred embodiment of the invention will now be described, by way of example only, with reference to the accompanying drawings, in which:

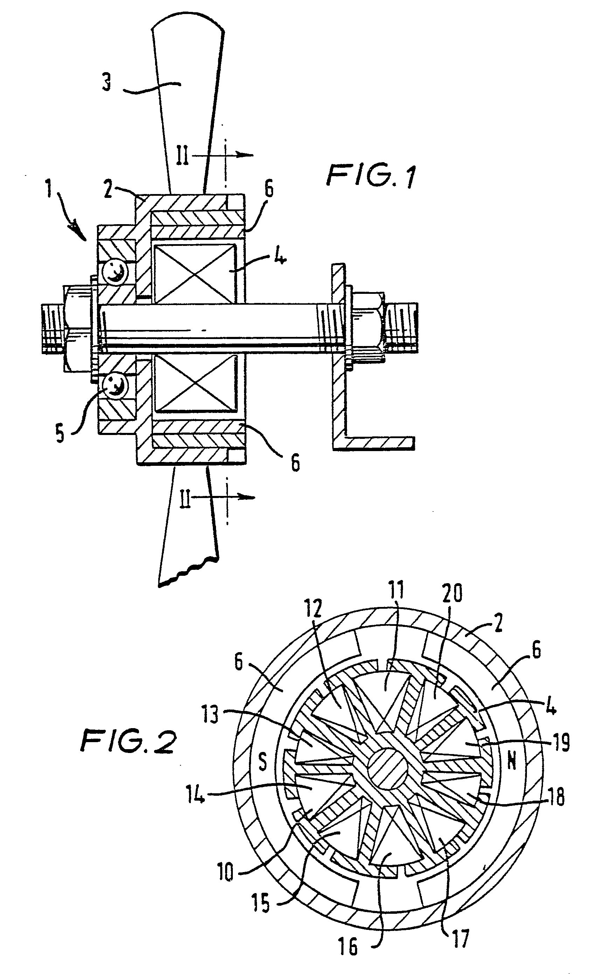

Figure 1 is an axial cross-section through a fan incorporating an electric motor in accordance with the invention;

Figure 2 is a radial cross-section through the fan of Figure 1, taken along the line II—II;

Figure 3 is a circuit diagram of the stator incorporated in the fan of Figures 1 and 2; and

Figures 4 and 5 are diagrams indicating the state energisation of the rotor in two different rotational positions.

Referring to the drawings, an electric motor, indicated generally at 1, comprises a rotor 2 which carries a set of fan blades 3. The rotor 2 is rotatably mounted on a stator 4 by means of a single bearing race 5. The rotor 2 carries a plurality (in this case two) of permanent magnets 6, 6 disposed circumferentially around the stator 4. One of the magnets 6 has a North pole piece facing the rotor, the other having a South pole piece facing the rotor.

The stator 4 is of conventional laminated construction, with windings 10 located in five pairs of radially opposed slots 11 to 20.

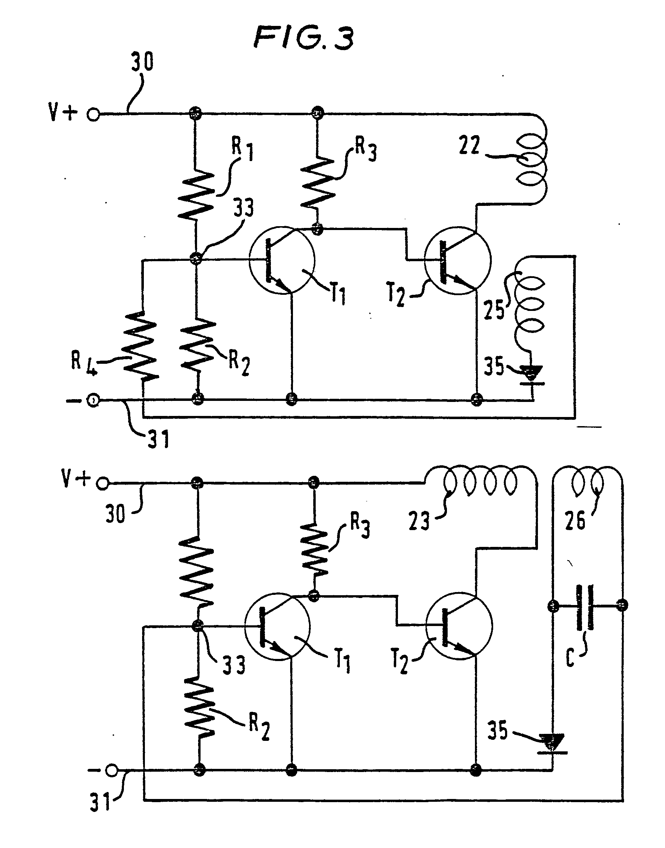

The windings 10 are divided into four groups. A first main winding 22 (Figure 3) occupies two adjacent pairs of opposite slots 11, 12, 16 and 17. A second main winding 23 (Figure 3) occupies three adjacent pairs of opposite slots 13 to 15 and 18 to 20 at 90° to those occupied by the first main winding 22.

A first search winding 25 (Figure 3) occupies the same slots as the first main winding 22, and a second search winding 26 occupies the same slots as the second main winding 23.

The main windings 22, 23 and the search windings 25, 26 are electrically interconnected by the circuit illustrated in Figure 3.

Considering the first main winding 22 and the first search winding 25, as illustrated in the upper part of Figure 3, a voltage V is supplied to the circuit by a DC voltage source along positive and negative lines 30, 31. The voltage across the supply lines 30, 31 is divided by first and second resistors $R_1$ and $R_2$. The dividing point 33 between the two resistors $R_1$ and $R_2$ is connected to the base of a drive transistor $T_1$ of the N—P—N type, the collector of which is connected to the positive supply line 30 through a third resistor $R_3$, the emitter of the drive transistor $T_1$ being connected to the negative supply line 31. The junction between the third resistor $R_3$ and the collector of the drive transistor $T_1$ is connected to the base of an N—P—N power transistor $T_2$ the collector of which is connected to one side of the first main winding 22, the other side of the first main winding 22 being connected to the positive supply line 30. The emitter of the power transistor $T_2$ is connected to the negative supply line 31.

One side of the search winding is connected to the negative supply line 31 via a diode 35. The other side of the search winding 25 is connected to the dividing point 33 between the two resistors $R_1$ and $R_2$ via a biasing resistor $R_4$.

The second main winding 23 and the second search winding 26 are connected to the supply lines 30, 31 in a manner similar to the first main and search windings 22, 25, as illustrated in the lower part of Figure 3, similar components being identified by the reference numerals. That part of the circuit for the second main and search windings differs from that for the first windings in that the bias resistor $R_4$ is omitted and the second search winding is connected in parallel with a capacitor C.

In operation, when the motor 1 is switched on, the positive voltage at the base of each drive transistor $T_1$ is low, so that the drive transistors do not conduct. The positive voltage applied to the bases of the power transistors $T_2$ are, however, high, so that they are conductive. Current therefore flows through the main windings 22, 23. As the current in the main windings increases, the magnetic fields generated by the main windings 22, 23 induce currents in the search windings 25, 26. This increases the positive voltage at the bases of the drive transistors $T_1$ to a level sufficient to cause the drive transistors to conduct. The potential at the bases of the power transistors $T_2$ therefore reduces so that the power transistors $T_2$ cease conducting. The currents through the main windings 22, 23 cease, and the associated magnetic fields collapse. The diodes 35 prevent the resulting reverse currents generated in the search windings 25, 26 from being transmitted to the drive transistors $T_1$. The potential at the bases of the drive transistors therefore drop so that the drive transistors $T_1$ also cease conducting. This increases the potential at the bases of the power transistors $T_2$ so that they start to conduct once again. The sequence of events is therefore repeated. The search windings 25, 26 and the associated transistors $T_1$, $T_2$ therefore act as switch circuits for the main windings 22, 23 and cause the magnetic fields produced by the main windings to rise and fall cylindrically.

The duration of the magnetic fields produced by each main winding will depend upon the period for which the drive transistors $T_1$ are held in a conducting state. This period differs for the two drive transistors $T_1$ because the capacitor C increases the time constant of the circuit incorporating the second search winding 26, whilst the bias resistor $R_4$ decreases the time constant of the current incorporating the first search winding 25.

The magnetic fields generated in the main windings 25, 26 interact with the permanent magnetic fields of the magnets 6 to rotate the rotor 4.

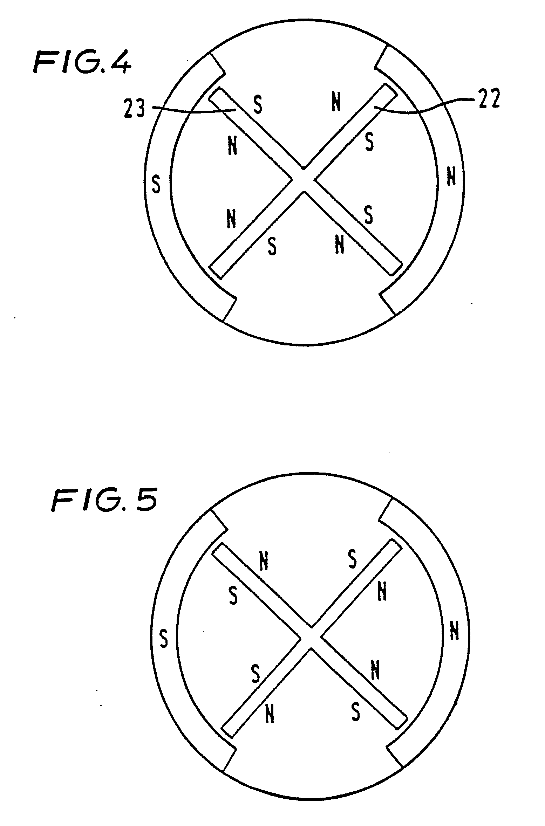

Figures 4 and 5 schematically illustrate the motor 1 in two starting positions and the respective polarities of the main windings 25, 26. In the positions illustrated, repulsion between the magnetic field produced by the main windings is at a minimum in Figure 4 and a maximum in Figure 5. Considering Figure 4, if, when the motor is switched on, the rotor were to move slightly clockwise out of the equilibrium position, the pulsating magnetic field established by the main windings would apply an anti-clockwise restoring force on the rotor tending to return it to its equilibrium position. Any initial movement of the rotor therefore results in an oscillation of the rotor about its equilibrium point. Since each movement of the rotor induces a current in the main windings, the field generated by the rotor is strengthened, and the amplitude of the oscillations of the rotor increase until the rotor turns through 180°. When this occurs, the rotor continues to rotate in the same direction.

As the rotor rotates, the search coils operate under the influence of the magnets in the rotor to actuate the main windings 22, 23 each time the search coils are swept by the magnets 6 on the rotor so that the rotor accelerates to a maximum operating speed.

If the circuits incorporating the first and second windings were identical, the rotor would be equally likely to commence rotation in either direction. In the present rotor however, the time constants of the switch circuits controlling the main windings 22, 23 are different. Hence the restoring forces exerted on the rotor by the second main windings are greater than those exerted by the first main windings. By selecting the time constants of the switch circuits the switching arrangement for the main windings can be matched to the inertia of the rotor to ensure that rotation always commences in the same direction.

The operation of the circuit is similar for the starting position illustrated in Figure 5. In this starting position, initial movement of the rotor from the unstable equilibrium position shown causes the rotor to move towards the position illustrated in Figure 4 with a consequent increase in the current in the main windings 22, 23. Thereafter the rotor operates in the manner previously described.

Although the embodiment of the invention described above is provided with only two main windings, the invention is equally applicable to motors incorporating three or more main windings. In such a construction, the initial oscillations of the rotor during starting would extend over a correspondingly shorter angular distance, thereby reducing start-up time.

Additionally, the rotor and stator may be constructed as parallel discs so that the length of the motor may be reduced.

**Claims**

1. An electrical motor comprising a rotor (2) carrying a plurality of permanent magnetic poles (6, 6), a stator (4) carrying at least two main windings (22, 23) which, when activated, interact with the magnetic fields generated by the said poles (6, 6) to drive the rotor (2) relative to the stator (4), search windings (25, 26) on the stator (4) each associated with a respective one of the main windings (22, 23) and arranged to interact with the magnetic field generated by the said poles (6, 6) and switches $(T_1, T_2)$ for each main winding operable by the search winding (25, 25) associated therewith to activate the main windings (22, 23) in sequence in accordance with the rotation of the rotor (2), characterised in that the switches activate the main windings for different relative durations during each of their respective operating cycles.

2. A motor according to Claim 1 wherein one of the main windings (23) occupies a greater part of the circumferential length of the stator (4) than the other.

3. A motor according to Claim 1 or Claim 2 wherein the switches comprise transistors $(T_1, T_2)$.

4. A motor according to Claim 3 wherein each switch comprises a power transistor $(T_2)$ for conducting current through the main winding (22, 23), and a drive transistor $(T_1)$ for controlling the conductive state of the power transistor $(T_2)$.

5. A motor according to any one of Claims 1 to 4 wherein each switch $(T_1, T_2)$ is operable in response to current induced in the search winding (25, 26) by the main winding (22, 23).

6. A motor according to any one of Claims 1 to 5 wherein the search windings (25, 26) are connected into circuits (26, C; 25, $R_4$) with the switches $(T_1, T_2)$, the said circuits having different time constants.

## Patentansprüche

1. Elektromotor mit einem eine Vielzahl permanentmagnetischer Pole (6, 6) tragenden Läufer (2), einem Ständer (4), der mindestens zwei Hauptwicklungen (22, 23) trägt, die bei ihrer Aktivierung mit den von den besagten Polen (6, 6) erzeugten Magnetfeldern in Wechselwirkung treten, um den Läufer (2) relativ zum Ständer (4) anzutreiben, jeweils einer entsprechenden der Hauptwicklungen (22, 23) zugeordnete Suchwicklungen (25, 26) am Ständer (4), die so angeordnet sind, dass sie mit dem von den besagten Polen (6, 6) erzeugtem Magnetfeld in Wechselwirkung treten, und Schalter $(T_1, T_2)$ für die jeweilige Hauptwicklung, die durch die dieser zugeordnete Suchwicklung (25, 25) betätigbar sind, um die Hauptwicklungen (22, 23) der Reihe nach entsprechend der Drehung des Läufers (2) zu aktivieren, dadurch gekennzeichnet, dass die Schalter die Hauptwicklungen für unterschiedliche relative Zeitspannen während ihrer jeweiligen entsprechenden Betriebszyklen aktivieren.

2. Motor nach Anspruch 1, dadurch gekennzeichnet, dass eine der Hauptwicklungen (23) einen grösseren Teil der Umfangslänge des Ständers (4) einnimmt, als die andere.

3. Motor nach Anspruch 1 oder Anspruch 2, dadurch gekennzeichnet, dass die Schalter Transistoren $(T_1, T_2)$ umfassen.

4. Motor nach Anspruch 3, dadurch gekennzeichnet, dass der jeweilige Schalter einen Leistungstransistor $(T_2)$ zum Leiten von Strom durch die Hauptwicklung (22, 23) und einen Treibertransistor $(T_1)$ zum Steuern des stromführenden Zustands des Leistungstransistors $(T_2)$ umfasst.

5. Motor nach einem der Ansprüche 1 bis 4, dadurch gekennzeichnet, dass der jeweilige Schalter $(T_1, T_2)$ als Reaktion auf von der Hauptwicklung (22, 23) in die Suchwicklung (25, 26) induzierten Strom betätigbar ist.

6. Motor nach einem der Ansprüche 1 bis 5, dadurch gekennzeichnet, dass die Suchwicklungen (25, 26) in Schaltkreise (26, C; 25, $R_4$) mit den Schaltern $(T_1, T_2)$ eingeschaltet sind, wobei die besagten Schaltkreise unterschiedliche Zeitkonstanten aufweisen.

## Revendications

1. Moteur électrique comprenant un rotor (2) portant plusieurs pôles magnétiques permanents (6, 6), un stator (4) portant au moins deux enroulements principaux (22, 23) qui, lorsqu'ils sont activés, présentent une interaction avec les champs magnétiques produits par les pôles (6, 6) pour entraîner le rotor (2) par rapport au stator (4), des enroulements de recherche (25, 26) sur le stator (4) associés chacun à un enroulement respectif des deux enroulements principaux (22, 23) et propre à avoir une interaction avec le champ magnétique produit par les pôles (6, 6) et des commutateurs $(T_1, T_2)$ pour chaque enroulement principal pouvant être actionnés par l'enroulement de recherche (25, 25) qui y est associé pour activer les enroulements principaux (22, 23) dans l'ordre en fonction de la rotation du rotor (2), caractérisé en ce que les commutateurs activent les enroulements principaux pendant des durées relatives différentes au cours de chacun de leurs cycles de fonctionnement respectifs.

2. Moteur suivant la revendication 1, dans lequel un des enroulements principaux (23) occupe une plus grande partie de la longueur circonférentielle du stator (4) que l'autre.

3. Moteur suivant la revendication 1 ou 2, dans lequel les commutateurs sont des transistors $(T_1, T_2)$.

4. Moteur suivant la revendication 3, dans lequel chaque commutateur comprend un transistor de puissance $(T_2)$ pour faire passer du courant à travers l'enroulement principaux (22, 23) et un transistor de commande $(T_1)$ pour régir l'état conducteur du transistor de puissance $(T_2)$.

5. Moteur suivant l'une quelconque des revendications 1 à 4, dans lequel chaque commutateur $(T_1, T_2)$ peut fonctionner en réaction au courant induit dans l'enroulement de recherche (25, 26) par l'enroulement principal (22, 23).

6. Moteur suivant l'une quelconque des revendications 1 à 5, dans lequel les enroulements de recherche (25, 26) sont connectés en circuits (26, C; 25, R₄) avec les commutateurs (T₁, T₂), ces circuits présentant des constantes de temps différentes.

FIG.1

FIG.2

1

FIG.3

FIG.4

23 — 22

FIG.5